# EUROPEAN PATENT SPECIFICATION

(11) **EP 3 734 291 B1**
(45) Date of publication and mention of the grant of the patent: **06.08.2025**
(21) Application number: 18895293.1
(22) Date of filing: 19.11.2018
(51) Int. Cl.: G01N 35/04

(54) **SPECIMEN PROCESSING SYSTEM**
PROBENVERARBEITUNGSSYSTEM
SYSTÈME DE TRAITEMENT D'ÉCHANTILLON

(30) Priority: 25.12.2017 JP 2017248433
(43) Date of publication of application: 04.11.2020
(73) Proprietor: Hitachi High-Tech Corporation, Minato-ku Tokyo 105-6409 (JP)
(72) Inventor: YAMAMOTO Tsuyoshi, Tokyo 105-6409 (JP); ONIZAWA Kuniaki, Tokyo 105-6409 (JP)
(74) Representative: Strehl & Partner mbB
(86) International application number: PCT/JP2018/042664
(87) International publication number: WO 2019/130906

(56) References cited:
- EP-A1- 2 315 036
- EP-A1- 3 355 063
- WO-A1-2015/093354
- WO-A1-2017/051642
- JP-A- 2000 055 924
- JP-A- 2001 099 844
- JP-A- 2001 242 179
- JP-A- 2010 121 936
- JP-A- 2017 110 943
- JP-A- H0 933 539
- US-A1- 2014 208 872
- US-A1- 2015 101 911
- US-A1- 2016 244 269

## Description

### Technical Field

The present invention relates to a specimen processing system that comprises an automatic analyzing device and a specimen processing device that are provided with transport lines that transfers a specimen container containing a specimen that is an analysis target.

### Background Art

As an example of rack transport such that, even if congestion of racks occurs in an automatic analyzing device provided with a plurality of rack supplying ports connected to a specimen transport system, specimens that are not subjected to analysis indefinitely do not exist, Patent Literature 1 describes supplying alternately or supplying of the racks in the respective rack supply ports in a moderate distribution in a case where racks having been charged into low priority rack supply ports are expected not to be supplied for a long time until supply of racks having been charged into high priority rack supply ports is completed.

### Citation List

### Patent Literature

Patent Literature 1: Japanese Patent Application Laid-Open No. 2014-130025

EP 3 355 063 A1 discloses a specimen processing system with the features in the preamble of present claim 1.

### Summary of Invention

### Technical Problem

In an automatic analyzing device performing quantitative/qualitative analysis of a specific component contained in a biological specimen such as blood and urine (hereinafter referred to as a specimen), and a specimen pre-processing device performing a pre-process such as a pre-process of a specimen to be required prior to analysis (the automatic analyzing device and the specimen preprocessing device will be hereinafter collectively referred to as a specimen processing system), the specimen is contained in an exclusive test tube (specimen container), and the test tube is mounted on a specimen container holder or the like and transferred in the respective devices and between the devices.

Regarding a transport path of the specimen, it is made capable of coping with various configurations according to the number and types of the automatic analyzing devices connected to the structure and system of a customer's facility itself.

In Patent Literature 1, a specimen processing system is disclosed which, in a case where specimens prior to analysis are set in a plurality of specimen supply sections, prevents the specimens prior to analysis from stagnating in the respective specimen supply sections by supplying the specimens alternately or in a moderate distribution to a specimen processing section.

However, in recent years, a problem has arisen in that the number of available IP addresses is restricted by an increase in the number of CPUs to be used according to diversification of the specimen processing system configuration and it is impossible to cope with various configurations which customers request.

Further, in the current specimen processing system, a specimen transport unit and a transfer unit are controlled in separate CPUs. Moreover, in the specimen transport unit, while the connection of an extending line unit is made possible, direction-turning is made impossible and, if the direction-turning is required, a specimen transport unit to be controlled with a different CPU is further required. Therefore, a problem has arisen in which device configuration is complicated and moreover an increase in an installation area of the system, and an increase in introduction cost and running cost occur.

The present invention has been made in view of the foregoing problems and has an object of providing a specimen processing system in which various system configuration can be constructed with control sections for control of transport lines that are less relative to the current specimen processing system.

### Solution to Problem

The present invention solves the foregoing problems by a specimen processing system as defined in claim 1.

### Advantageous Effects of Invention

According to the present invention, it is possible to construct various system configuration with control sections for control of transport line that are less relative to the current specimen processing system. Problems, configurations, and effects other than those described above will be made apparent from the following explanation of embodiments.

### Brief Description of Drawings

Fig. 1 is a schematic diagram of an example of an entire configuration of a specimen processing system according to an embodiment of the present invention.
Fig. 2 is an outline view that shows connection of a transport unit body, a transfer unit, an extending line unit, a direction turning unit, and a terminal unit in the specimen processing system according to the embodiment of the present invention.
Fig. 3 is a schematic diagram showing a configuration example of a range to be controlled by one CPU in the specimen processing system according to the embodiment of the present invention.
Fig. 4 is a schematic diagram showing a configuration example of a range to be controlled by one CPU in the specimen processing system according to the embodiment of the present invention.
Fig. 5 is a schematic diagram showing a configuration example of a range to be controlled by one CPU in the specimen processing system according to the embodiment of the present invention.
Fig. 6 is a schematic diagram showing a configuration example of a range to be controlled by one CPU in the specimen processing system according to the embodiment of the present invention.
Fig. 7 is a view showing a schematic configuration of a control board in the specimen processing system according to the embodiment of the present invention.
Fig. 8 is a flow chart showing connection contents of a range to be controlled by one CPU in the specimen processing system according to the embodiment of the present invention.
Fig. 9 is a flow chart showing a setting method of the control board in the specimen processing system according to the embodiment of the present invention.

### Description of Embodiments

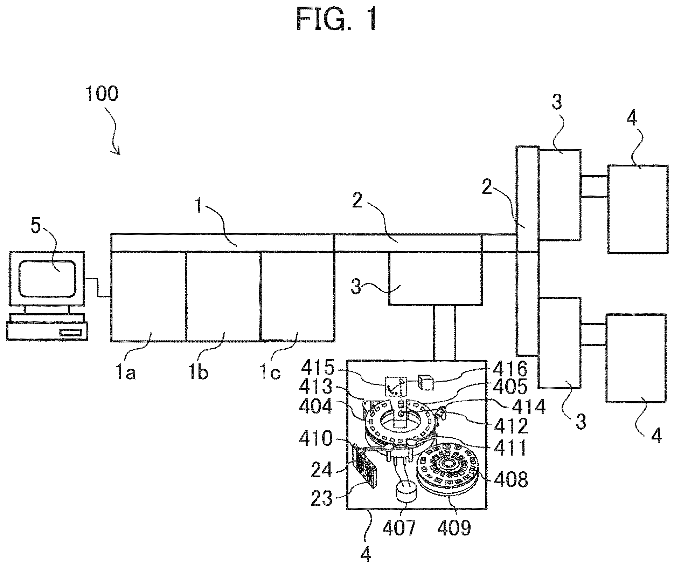

Referring to Figs. 1 to 9, embodiments of a specimen processing system of the present invention will be explained.

Firstly, referring to Fig. 1, an entire configuration of the specimen processing system will be explained. Fig. 1 is a view showing the specimen processing system that processes a specimen such as blood and urine.

In Fig. 1, the specimen processing system 100 is provided with a pre-processing unit 1, specimen transport units 2, transfer units 3, analyzing devices 4, a control device 5, etc.

The pre-processing unit 1 is a unit performing analysis pre-processing of a specimen contained in a specimen container 24, and is composed of a specimen container holder charging section 1b, a specimen dispensing section 1c, a specimen container holder storing section 1a, etc.

The specimen container holder charging section 1b is a unit that feeds the specimen container 24 having a specimen such as blood or urine contained therein into a transport line and performs centrifugal separation of the specimen and unplugging of the specimen container 24. The specimen dispensing section 1c performs label-sticking with respect to the specimen container 24 for subdividing the specimen, dispensing of the specimen such as blood or urine, and the like. The specimen container holder storing section 1a is a unit that performs plugging, sorting, and storing of the specimen container 24 whose processing has been completed.

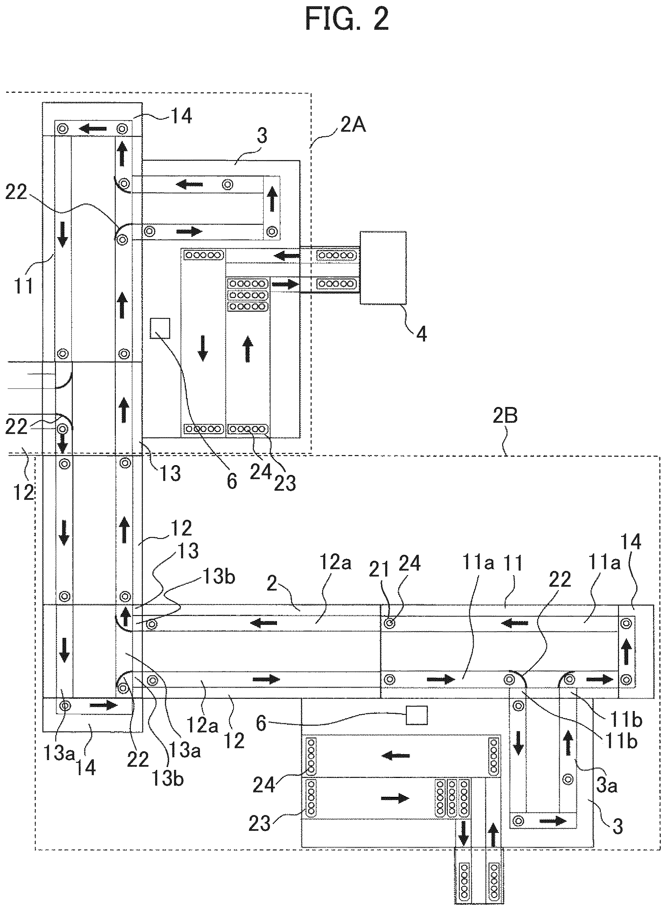

The specimen transport unit 2 is a unit that transfers a specimen container holder 21 (see Fig. 2) holding the specimen container 24 between the pre-processing unit 1 and the analyzing device 4 to a predetermined unit. Details thereof will be described hereinafter.

The transfer unit 3 is a unit that transfers the specimen container 24 held with respect to the specimen container holder 21 to a specimen rack 23 for charging the specimen container 24 into the analyzing device 4, in order to analyze the specimen container 24 with the analyzing device 4. Details thereof will be described hereinafter.

The analyzing device 4 is a section that measures the concentration of a biological component contained in the specimen having been subjected to the pre-processing by the pre-processing unit 1, and comprises a reaction container 404, a reaction disk mechanism 405, a thermostatic tank 407, a reagent chamber section 409, a specimen dispensing mechanism 410, a reagent dispensing mechanism 411, a stirring mechanism 412, a cleaning mechanism 413, a light source 414, a photometer 415, and an A/D (Analog/Digital) converter 416.

The reaction container 404 is a container in which a reagent and a specimen are put and that reacts the specimen with the reagent.

The reaction disk mechanism 405 is a member holding a plurality of reaction containers 404. Moreover, the reaction disk mechanism 405 transfers the reaction container 404 installed to itself to a designated position.

The thermostatic tank 407 is a mechanism for maintaining the reaction container 404 installed to the reaction disk mechanism 405 at a predetermined temperature and maintains the reaction container at the predetermined temperature.

The reagent chamber section 409 is a member that holds a plurality of reagent bottles that are containers storing reagents used in analysis. Moreover, the reagent chamber section 409 transfers the reagent bottles 408 installed to itself to a designated position.

The specimen dispensing mechanism 410 is provided with a specimen dispensing probe and is an instrument that divides the specimen by a given small amount each. The specimen dispensing mechanism 410 dispenses a predetermined amount of the specimen contained in the specimen container 24 into the reaction container 404.

The reagent dispensing mechanism 411 is provided with a reagent dispensing probe and is an instrument that divides the reagent by a given small amount each. The reagent dispensing mechanism 411 dispenses a predetermined amount of the reagent contained in the reagent bottle 408 into the reaction container 404.

The stirring mechanism 412 is an instrument that stirs the solution of the specimen and reagent contained in the reaction container 404 to uniformize a distribution state of the components.

The cleaning mechanism 413 is an instrument that performs aspiration of waste liquid and discharging of cleaning liquid. The cleaning mechanism 413 aspirates the solution of the reagent and specimen contained in the reaction container 404. Moreover, the cleaning mechanism 413 ejects the cleaning liquid into the reaction container 404 to clean the reaction container 404.

The light source 414 is a section emitting light used for spectrometry and is composed of a halogen lamp, an LED, etc.

The photometer 415 is a section that receives the light, emitted by the light source 414 and passing through the reaction container 404, to measure the absorbance of the solution in the reaction container 404, and is composed of a spectrophotometer or the like. The photometer 415 transmits information of the absorbance to the A/D converter 416.

The A/D converter 416 is an implement converting an analog signal into a digital signal and converts conducts the inputted analog signal into the digital signal and thereafter performs recording of it in a database.

Incidentally, while the device that performs biochemical analysis of blood or the like as the analyzing device 4 is explained as an example in Fig. 1, the analyzing device is not limited to the biochemical analyzing device and may be an immunological analyzing device or the like that performs immunological analysis.

The control device 5 is connected to all of the pre-processing unit 1, the specimen transport unit 2, the transfer unit 3 and the analyzing device 4 on a network such as LAN and can perform the overall control of the respective instruments in these respective units and various processes including arithmetic operation of analysis results or the like.

In the specimen processing system 100 described above, it is necessary to modify the number of and arrangement of the specimen transport units 2 and the transfer units 3 according to system configuration required for every customer.

Next, referring to Fig. 2 to Fig. 9, details of configuration of the specimen transport unit 2 and the transfer unit 3 and connecting method of the units will be explained.

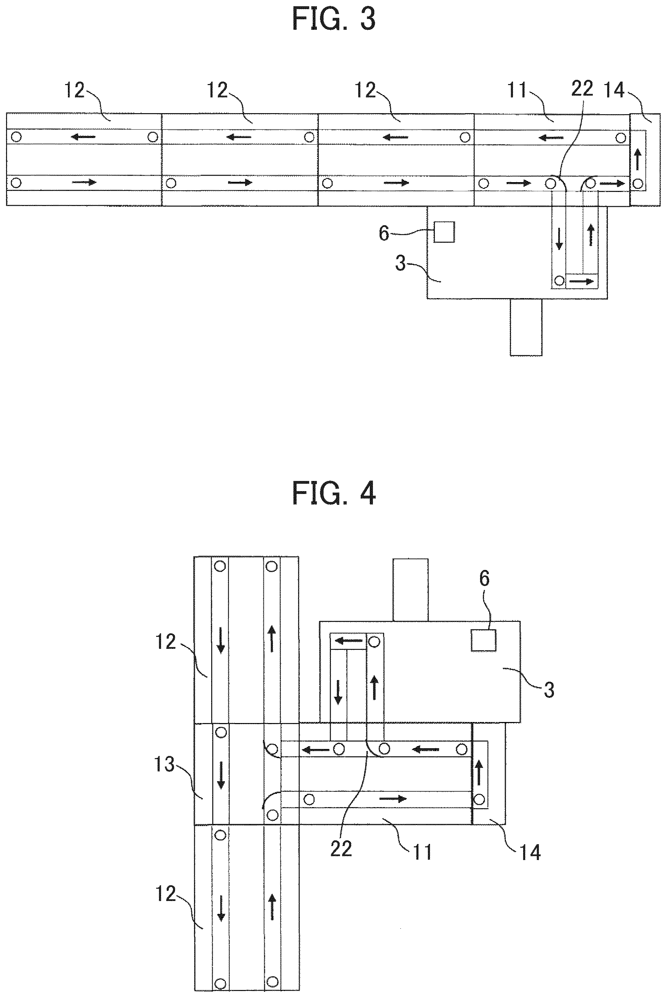

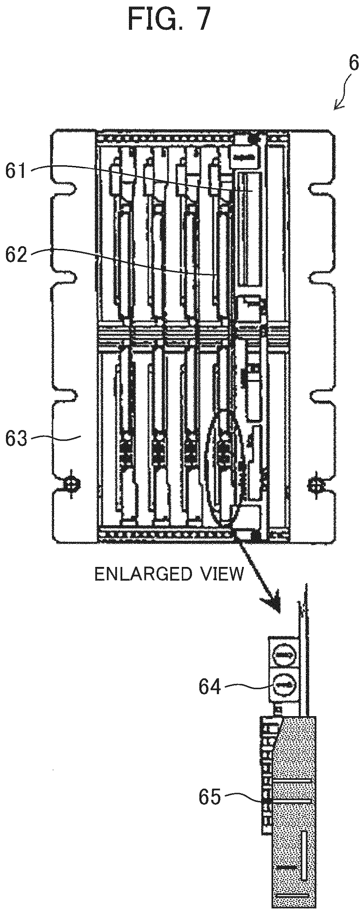

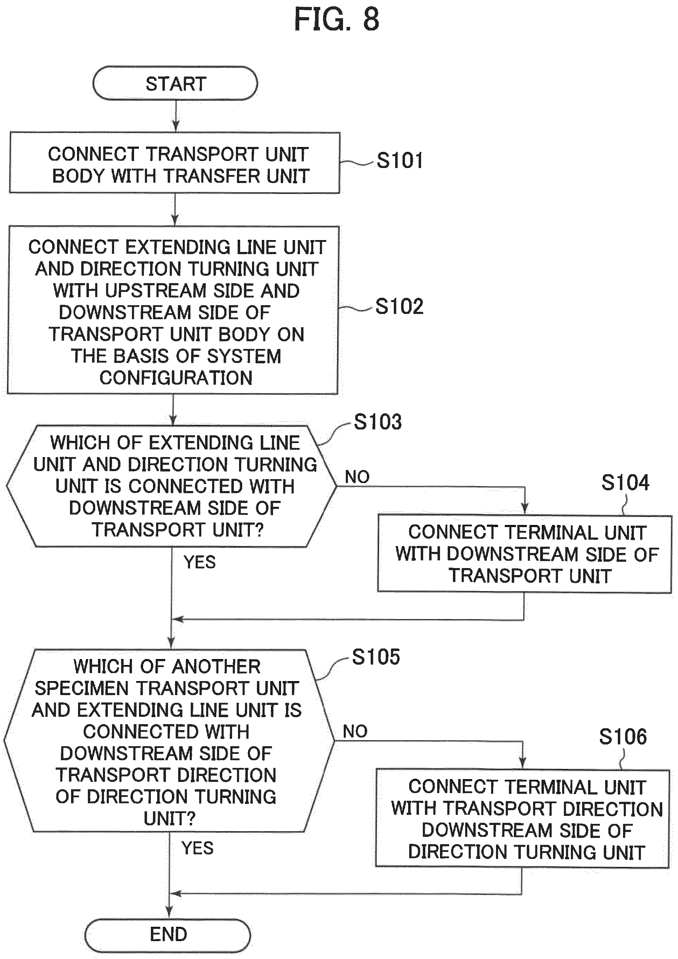

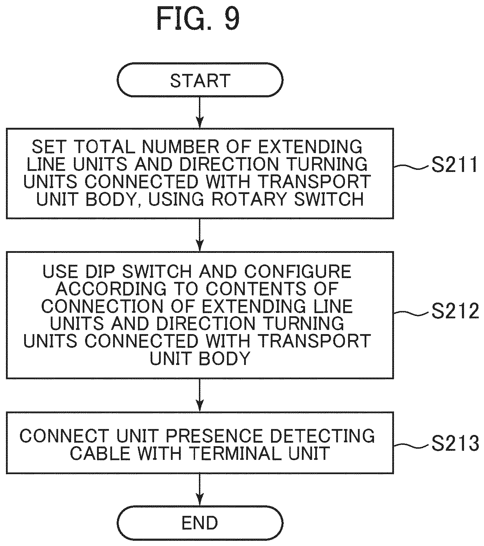

In Fig. 2, an example of the connection of the specimen transport unit 2 and the transfer unit 3 in the present invention is illustrated. In Fig. 3 to Fig. 6, examples of the configuration of the specimen transport unit 2 and the transfer unit 3 which are made controllable with one CPU substrate 61 are shown. In Fig. 7, a schematic configuration of a control board 6 having one CPU substrate 61 is shown. In Fig. 8, a flow chart of a connection method of the specimen transport unit 2 and the transfer unit 3 made controllable with one CPU substrate 61 in the present invention is shown. In Fig. 9, a flow chart of a setting method of the control board made controllable with one CPU substrate 61 in the present invention is shown. Incidentally, reference signs that are identical to those in Fig. 1 denote identical parts.

As shown in Fig. 2, the specimen transport unit 2 is configurated by connecting the required number of extending lines 12, direction turning units 13, and terminal units 14 that are required according to the system configuration, with respect to a transport unit body 11.

For example, as shown in Fig. 2, a specimen transport unit 2 can be employed that comprises a specimen transport unit 2A composed of one transport unit body 11, one extending line unit 12, one direction turning unit 13, and one terminal unit 14, and a specimen transport unit 2B composed of one transport unit body 11, two extending line units 12, one direction turning unit 13, and two terminal units 14.

Each of these specimen transport unit 2A and specimen transport unit 2B becomes a cover range for one CPU substrate 61 (see Fig. 7) provided at the control board 6.

Incidentally, the configuration of the specimen transport unit 2 in which the specimen transport unit 2 is covered with the one CPU substrate 61 is not limited to such forms of the specimen transport unit 2A and the specimen transport unit 2B as shown in Fig. 2 and, as shown in Fig. 3 to Fig. 6, various arrangement configurations can be employed within a range satisfying the above-mentioned maximum requirements.

For example, as shown in Fig. 3, a configuration may be employed in which three extending line units 12 are arranged at one side of the transport unit body 11 and one terminal unit 14 is arranged at the other side of the transport unit body 11.

Alternatively, as shown in Fig. 4, a configuration may be employed in which a direction turning unit 13 is arranged at one side of the transport unit body 11, a terminal unit 14 is arranged at the other side of the transport unit body 11, and extending line units 12 are respectively arranged one by one at the direction turning unit 13.

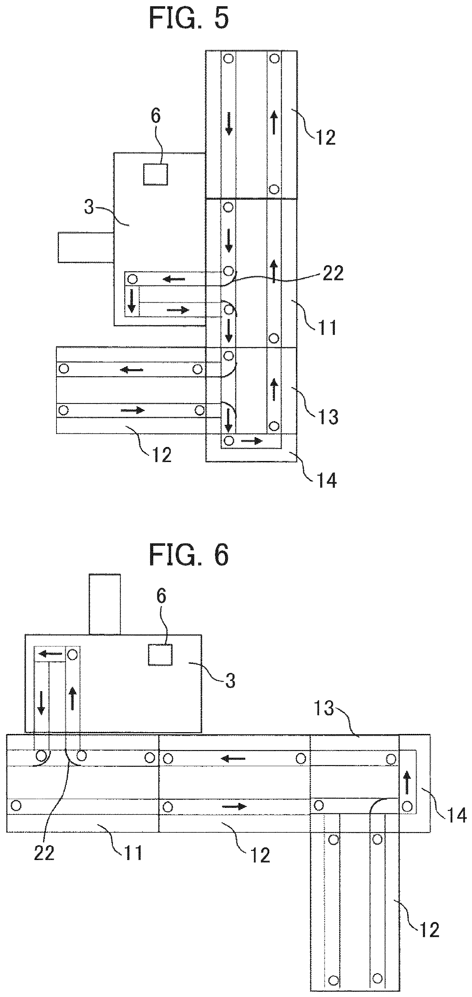

Also, as shown in Fig. 5, a configuration may be employed in which one direction turning unit 13 is arranged at one side of the transport unit body 11, one extending line unit 12 is arranged at the other side of the transport unit body 11, and an extending line unit 12 and a terminal unit 14 are respectively arranged one by one at the direction turning unit 13.

Moreover, as shown in Fig. 6, a configuration may be employed in which an extending line unit 12, a direction turning unit 13, an extending line unit 12, and a terminal unit 14 are arranged at one side of the transport unit body 11.

In the forms shown in Fig. 3 to Fig. 6, any of a transport unit body 11, an extending line unit 12, and a direction turning unit 13 of another specimen transport line unit 2 is arranged outside the range covered with one CPU substrate 61.

Thus, the range of the specimen transport unit 2 covered with one CPU substrate 61 is, at most, one transport unit body 11, three or less extension line units 12 and direction turning units 13 in total, and terminal units 14 as many as the direction turning units 13, and the required number of extending line units 12, direction turning units 13 and terminal units 14 are connected according to the system configuration.

By this configuration, to connect the extending line unit 12 and the direction turning unit 13 in the transport unit body 11 is made possible and an unordered connection is made possible. And, to construct manifold system configurations in one CPU substrate 61 control is made possible.

Returning to Fig. 2, the transport unit body 11 comprises two transport lines 11a transferring the specimen container 24 in one direction, two branch lines direction-turning the specimen container 24 from the transport lines 11a, and a branch lever 22 disposed at a connection part between the branch lines 11b and the transport lines 11a.

In the transport unit body 11, the transfer unit 3 is connected directly in either of perpendicular directions with respect to the transport direction. In the present invention, connection in the both directions is not accepted in order to reduce the number of mounted CPU substrates 61 of the control board 6. In the transport unit body 11, a flow direction of the specimen container holder 21 is changed by falling down the branch lever 22, the specimen container holder 21 is transferred into the transfer unit 3 or the specimen container holder 21 is discharged into the transfer unit 3.

In the transport unit body 11, it is possible to connect the extending line unit 12 and the direction turning unit 13 in either the front and rear of a horizontal direction with respect to the transport direction of the specimen container 24, and the connection order is a random order as shown in Fig. 2 and Figs. 3 to 6.

Further, when there is no connection of the extending line unit 12 and the direction turning unit 13 both in the front and rear of the horizontal direction with respect to the transport direction of the transport unit body 11, the terminal unit 14 is connected.

The extending line unit 12 is a unit connecting two points separated in a straight direction and it is possible to connect the transport unit body 11, the extending line unit 12, and the direction turning unit 13 in the front and rear sides. The extending line unit 12 is provided with two transport lines 12a transferring the specimen container 24 in one direction.

The direction turning unit 13 is a unit changing the transport direction of the specimen container 24, includes two transport lines 13a transferring the specimen container 24 in one direction, two branch lines 13b direction-turning the specimen container 24 from the transport lines 13a, and a branch lever 22 disposed in a connection portion between the transport branch lines 13b and the transport lines 13a, and makes it possible to direction-turn the transport direction of the specimen container holder 21.

In the direction turning unit 13, it is possible to connect the transport unit body 11, the extending line unit 12, and the terminal unit 14 even in any of four directions including the directions perpendicular to the transport direction of the specimen container 24. When the transport unit body 11 and the extending line unit 12 are connected in the perpendicular direction with respect to the transport direction of the direction turning unit 13, the flow direction of the specimen container holder 21 is changed by falling down the branch lever 22 and the specimen container holder 21 is transferred into the connected transport unit body 11 and extending line unit 12. If there is no connection between the transport unit body 11 and the extending line unit 12 in the horizontal direction with respect to the transport direction of the direction turning unit 13, the terminal unit 14 is connected.

The terminal unit 14 is a unit disposed at the end portion of the specimen transport unit 2. The presence of this terminal unit 14 allows the units to be connected to the downstream side by a transport path of single stroke writing (one-way transport). That is, when there is no connection of the units to the downstream side with respect to the transport unit body 11 and the direction turning unit 13, the terminal unit 14 allows the transport path not to be interrupted.

As shown in Fig. 2, the transfer unit 3 includes a U-shaped transport line 3a connected to the branch line 11b of the transport unit body 11. As shown in Fig. 3 and Figs. 3 to 6, on the transfer unit 3, the control board 6 is mounted. The transfer unit 3 is required to be connected directly to the transport unit body 11 in order to control the specimen transport unit 2.

In the transfer unit 3, the specimen container 24 held with respect to the specimen container holder 21 is transferred into the specimen rack 23 and transferred to the analyzing device 4. Further, the specimen container 24 whose analyzing process is completed in the analyzing device 4 is transferred from the specimen rack 23 to the specimen container holder 21 and transferred to the specimen transport unit 2.

As shown in Fig. 7, the control board 6 includes a CPU substrate 61, a motor controller substrate 62, a VME rack 63, a rotary switch 64, and a dip switch 65.

The CPU substrate 61 directly controls the operation of the transfer unit 3, the transport unit body 11, the extending line unit 12, the direction turning unit 13, and the terminal unit 14, based on a control signal from the control device 5.

The motor controller substrate 62 generates and outputs drive signals for the respective units in the specimen transport unit 2, and a motor or the like provided in the transfer unit 3, based on the control signal from the CPU substrate 61.

The VME rack 63 is a rack holding the CPU substrate 61, the motor controller substrate 62, the rotary switch 64, and the dip switch 65.

The rotary switch 64 is a switch setting the number of connections of the extending line unit 12 and the direction turning unit 13 in the specimen transport unit 2.

The dip switch 65 is a switch setting the connection direction of the extending line unit 12, the direction turning unit 13, and terminal unit 14 in the specimen transport unit 2.

Next, referring to Fig. 8, a method of connecting the transfer unit 3 and the specimen transport unit 2 for enabling control in one CPU substrate 61 of the specimen processing system in the present invention will be explained.

In Fig. 8, the transport unit body 11 and the specimen transport unit 2 are firstly connected in order to make it possible to control the transfer unit 3 and the specimen transport unit 2 with one CPU substrate 61 (Step S101).

Next, based on the system configuration, the extending line units 12 and the direction turning units 13 of the required number connected to the transport unit body 11 are connected (Step S102). At this time, the direction for connection of the extending line unit 12 and the direction turning unit 13 with respect to the transport unit body 11 is unordered.

Next, whether or not the extending line unit 12 and the direction turning unit 13 are connected to the downstream side of the transport unit body 11 of interest in the required system configuration is confirmed (Step S103). When either the extending line unit 12 or the direction turning unit 13 is connected to the downstream side of the transport unit body 11, process progresses to Step S105 and, when both are not connected, the process progresses to Step S104.

If the extending line unit 12 and the direction turning unit 13 are not connected to the downstream side of the transport unit body 11 of interest in the required system configuration, the terminal unit 14 is connected to the downstream side of the transport unit body 11 of interest in the required system configuration (Step S104).

Next, whether or not the transport unit body 11 and the extending line unit 12 are connected to the downstream side of the transport direction of the direction turning unit 13 of interest in the required system configuration is confirmed (Step S105). When either the extending line unit 12 or the direction turning unit 13 is connected to the downstream side of the transport direction of the direction turning unit 13, the process is finished and, when both are not connected, the process progresses to Step S106.

If the transport unit body 11 and the extending line unit 12 are not connected to the downstream side of the direction turning unit 13 of interest in the required system configuration, the terminal unit 14 is connected to the transport direction downstream side of the direction turning unit 13 (Step S106) and the process is ended.

Next, referring to Fig. 9, a setting method of the rotary switch 64 and the dip switch 65 will be explained which is performed in order to recognize the respective units in a combination of the extending line unit 12, the direction turning unit 13, and the terminal unit 14 connected to the transport unit body 11 of the specimen transport unit 2 in the specimen processing system according to the embodiment 1 of the present invention.

As shown in Fig. 9, based on the configuration of the specimen transport unit 2 which enables the control in one CPU substrate 61, the total number of the extending line units 12 and the direction turning units 13 connected directly or indirectly with the transport unit body 11 is set by the rotary switch 64 (Step S211). In this Step S211, the extending line unit 12 and the direction turning unit 13 are not distinguished and the total number of the extending line units 12 and the direction turning units 13 is set.

Then, in accordance with the connection contents of the extending line unit 12 and the direction turning unit 13 connected to the transport unit body 11, configuration is performed on the basis of determined criteria, using the dip switch 65 (Step S212). For example, in the case of such a configuration of the specimen transport unit 2A as shown in Fig. 2, a pattern A is configured, in the case of such a configuration of the specimen transport unit 2B, a pattern B is configured, in the case of such arrangement as shown in Fig. 3, a pattern C is configured, in the case of such arrangement as shown in Fig. 4, a pattern D is configured, in the case of such arrangement as shown in Fig. 5, a pattern E is configured, in the case of such arrangement as shown in Fig. 6, a pattern F is configured.

Then, if the terminal unit is connected to the transport unit body 11 and the direction turning unit 13, a unit presence detecting cable for the terminal unit 14 is connected to the terminal unit 14 (Step S213). Thereby, the CPU substrate 61 of the control board 6 is made capable of discriminating the presence and absence of the terminal unit 14.

By the control board 6 set in this way, the specimen transport operation by the specimen transport unit 2 and the transfer unit 3 is controlled.

Next, the effects of the present embodiment will be explained.

The specimen processing system 100 of the present embodiment described above is provided with the pre-processing unit 1 performing analysis pre-processing of the specimen stored in the specimen container 24, the analyzing device 4 performing analysis processing of the specimen subjected to the pre-processing by the pre-processing unit 1, the specimen transport unit 2 transporting the specimen container 24 between the pre-processing unit 1 and the analyzing device 4, and the transfer unit 3 transferring the specimen between the analyzing device 4 and the specimen transport unit 2, and the specimen transport unit 2 includes the transport unit body 11, the extending line unit 12, the direction turning unit 13, and the terminal unit 14, and is further provided with one control board 6 which is mounted on the transport unit body 11 or the transfer unit 3 and controls the operation of the transfer unit 3, the transport unit body 11, the extending line unit 12, the direction turning unit 13, and the terminal unit 14 as a transport control of the specimen container 24.

In this way, the specimen transport unit 2 is unit-configurated in such a manner to be appropriately configuration-changeable in accordance with the configuration of the specimen processing system 100, and also the transfer unit 3 and the specimen transport unit 2 are controlled by one control board 6, to thereby enable the control of various system configurations in the same CPU substrate 61. Therefore, it is possible to reduce the number of uses of the CPU substrate 61 in the entire specimen processing system 100, and it is possible to reduce the number of IP addresses required and to realize the diversification of the entire configuration of the specimen processing system 100.

Also, the extending line unit 12 and the direction turning unit 13 are connected with respect to the transport unit body 11 in no particular order, so that it is possible to construct various system configurations more easily.

Further, the transfer unit 3 and the transport unit body 11 are directly connected, so that it is possible to easily realize control circuit configuration in the same CPU substrate 61.

Moreover, the control board 6 comprises the rotary switch 64 and the dip switch 65 that are configured based upon the connection contents of the extending line unit 12 and the direction turning unit 13 in the specimen transport unit 2, so that the control circuit configuration by one CPU substrate 61 can be more easily realized.

Further, at the end portion of the specimen transport unit 2, the terminal unit 14 is disposed, and the transfer unit 3, the transport unit body 11, the extending line unit 12, the direction turning unit 13, and the terminal unit 14 transport the specimen container 24 in one way, whereby it is possible to form a transport path of single stroke writing and to secure a wide control range by one CPU substrate 61. Therefore, it is possible more effectively reduce the total number of the CPU substrates 61 used in the entire system.

Also, the transport unit body 11 includes the two transport lines 11a transferring the specimen container 24 in one direction, the two branch lines 11b for direction-turning the specimen container 24 from the transport lines 11a, and the branch lever 22 disposed at the connection portion between the branch lines 11b and the transport lines 11a, and the direction turning unit 13 includes the two transport lines 13a transferring the specimen container 24 in one direction, the two branch lines 13b for direction-turning the specimen container 24 from the transport lines 13a, and the branch lever 22 is disposed at the connection portion between the branch lines 13b and the transport lines 13a, whereby it is possible to more easily form the transport path of single stroke writing.

Furthermore, the transfer unit 3 includes the U-shaped transport line 3a connected to the branch line 11b of the transport unit body 11, whereby it is also possible to more easily form the transport path of single stroke writing.

Furthermore, the extending line unit 12 is provided with two transport lines transferring the specimen container 24 in one direction, thereby making it possible to more easily form the transport path of single stroke writing.

Moreover, the specimen transport unit 2 is composed of one transport unit body 11, three or less extending line unit 12 and direction turning unit 13 in total, and the terminal units 14 as many as the direction turning units 13, thereby making it possible to ensure a maximum control target range by one control board 6 and to more effectively reduce the total number of the CPU substrates to be used in the entire system.

Further, the control board 6 is mounted on the transfer unit 3, whereby there is room in the space, so that it is possible to easily incorporate various substrates including the CPU substrate 61 in the control board 6 and to widely secure the control target range by one control board 6.

### (Others)

Incidentally, the present invention is not limited to the above-mentioned embodiments and various modifications and applications can be made. The above-mentioned embodiments are those described in detail in order to explain the present invention in an easily understandable manner and are not necessarily limited to those comprising all the configurations described.

For example, while the case where the control board 6 is mounted on the transfer unit 3 has been explained in the above-mentioned embodiments, the unit on which the control board 6 is mounted is not limited to the transfer unit 3 and the control board 6 may be mounted on the transport unit body 11. Even in this case, the method of connection between the transfer unit 3 and the transport unit body 11 and the connection method of the transport unit body 11, the extending line unit 12, the direction turning unit 13, and the terminal unit 14 are the same as in the above-mentioned embodiments.

### Reference Signs List

1: Pre-processing unit (Pre-processing device)
1a: Specimen container holder storing section
1b: Specimen container holder charging section
1c: Specimen dispensing section
2, 2A, 2B: Specimen transport unit
3: Transfer unit
3a: Transport line
4: Analyzing device
5: Control device
6: Control board (Control unit)
11: Transport unit body
11a: Transport line
11b: Branch line
12: Extending line unit
12a: Transport line
13: Direction turning unit
13a: Transport line
13b: Branch line
14: Terminal unit
21: Specimen container holder
22: Branch lever
23: Specimen rack
24: Specimen container
61: CPU substrate
62: Motor controller substrate
63: VME rack
64: Rotary switch
65: Dip Switch
100: Specimen processing system
404: Reaction container
405: Reaction disk mechanism
407: Thermostatic tank
408: Reagent bottle
409: Reagent chamber section
410: Specimen dispensing mechanism
411: Reagent dispensing mechanism
412: Stirring mechanism
413: Cleaning mechanism
414: Light source
415: Photometer
416: A/D converter

## Claims

1. A specimen processing system (100) comprising:
a pre-processing device (1) performing analysis pre-processing of a specimen contained in a specimen container (24);
an analyzing device (4) performing analysis processing of the specimen having been subjected to the pre-processing by the pre-processing device (1);
a specimen transport unit (2) transporting the specimen container (24) in a one-way transport path between the pre-processing device (1) and the analyzing device (4);
a transfer unit (3) transferring the specimen between the analyzing device (4) and the specimen transport unit (2); and
a control device (5) that is connected to the pre-processing unit (1), the specimen transport unit (2), the transfer unit (3) and the analyzing device (4) on a network and can perform overall control of the respective instruments in these respective units and various processes including arithmetic operation of analysis results or the like,
wherein the specimen transport unit (2) comprises a required number, according to a system configuration, of:
a transport unit body (11) for directly connecting to the transfer unit (3) in either of perpendicular directions with respect to a transport direction,
a direction turning unit (13) changing the transport direction of the specimen container (24),
an extending line unit (12) connecting two points separated in a straight direction to which it is possible to connect any of the transport unit body (11), another extending line unit (12), and the direction turning unit (13), and
a terminal unit (14) connected to a downstream side of the transport unit body (11) if no extending line unit (12) or direction turning unit (13) is connected to the downstream side of the transport unit body (11), and connected to a downstream side of the direction turning unit (13) if no transport unit body (11) or extending line unit (12) is connected to the downstream side of the direction turning unit (13),
**characterized by** a control board (6) that is mounted on the transport unit body (11) or the transfer unit (3),
wherein the specimen transport unit (2) is composed of one transport unit body (11), three or less extending line units (12) and direction turning units (13) in total, and terminal units (14) as many as the direction turning units (13),
wherein the control board (6) includes a CPU substrate (61) for directly controlling the operation of the transfer unit (3), the transport unit body (11), the extending line unit (12), the direction turning unit (13), and the terminal unit (14) as transport control of the specimen container (24) based on a control signal from the control device (5), and
wherein the maximum control target range controllable by the CPU substrate (61) is, at most, one transport unit body (11), three or less extension line units (12) and direction turning units (13) in total, and terminal units (14) as many as the direction turning units (13).

2. The specimen processing system (100) according to claim 1, **characterized in that** the extending line (12) and the direction turning unit (13) are connected to the transport unit body (11) in a random order.

3. The specimen processing system (100) according to claim 2, **characterized in that** the control unit (6) comprises a rotary switch (64) and a dip switch (65) that are set based upon connection contents of the extending line unit (12) and the direction turning unit (13) in the specimen transport unit (2).

## Patentansprüche

1. Probenverarbeitungssystem (100), umfassend:
eine Vorverarbeitungsvorrichtung (1), die eine Analysevorverarbeitung einer in einem Probenbehälter (24) enthaltenen Probe durchführt;
eine Analysevorrichtung (4), die eine Analyseverarbeitung der Probe durchführt, die der Vorverarbeitung durch die Vorverarbeitungsvorrichtung (1) unterzogen wurde;
eine Probentransporteinheit (2), die den Probenbehälter (24) in einem Einbahntransportweg zwischen der Vorverarbeitungsvorrichtung (1) und der Analysevorrichtung (4) transportiert;
eine Übertragungseinheit (3), die die Probe zwischen der Analysevorrichtung (4) und der Probentransporteinheit (2) überträgt; und
eine Steuervorrichtung (5), die mit der Vorverarbeitungseinheit (1), der Probentransporteinheit (2), der Übertragungseinheit (3) und der Analysevorrichtung (4) in einem Netzwerk verbunden ist und die Gesamtsteuerung der jeweiligen Instrumente in diesen jeweiligen Einheiten und verschiedene Prozesse einschließlich arithmetischer Operation von Analyseergebnissen oder dergleichen durchführen kann,
wobei die Probentransporteinheit (2) eine gemäß einer Systemkonfiguration erforderliche Anzahl umfasst von:
einem Transporteinheitskörper (11) zum direkten Verbinden mit der Übertragungseinheit (3) in einer der senkrechten Richtungen in Bezug auf eine Transportrichtung,
einer Richtungsdreheinheit (13), die die Transportrichtung des Probenbehälters (24) ändert,
einer Verlängerungslinieneinheit (12), die zwei in gerader Richtung getrennte Punkte verbindet, mit der es möglich ist, den Transporteinheitskörper (11), eine andere Verlängerungslinieneinheit (12) und/oder die Richtungsdreheinheit (13) zu verbinden, und
einer Endeinheit (14), die mit einer stromabwärtigen Seite des Transporteinheitskörpers (11) verbunden ist, wenn keine Verlängerungslinieneinheit (12) oder Richtungsdreheinheit (13) mit der stromabwärtigen Seite des Transporteinheitskörpers (11) verbunden ist, und die mit einer stromabwärtigen Seite der Richtungsdreheinheit (13) verbunden ist, wenn kein Transporteinheitskörper (11) oder Verlängerungslinieneinheit (12) mit der stromabwärtigen Seite der Richtungsdreheinheit (13) verbunden ist,
**gekennzeichnet durch** eine Steuerplatine (6), die auf dem Transporteinheitskörper (11) oder der Übertragungseinheit (3) montiert ist,
wobei die Probentransporteinheit (2) aus einem Transporteinheitskörper (11), insgesamt drei oder weniger Verlängerungslinieneinheiten (12) und Richtungsdreheinheiten (13) und so vielen Endeinheiten (14) wie Richtungsdreheinheiten (13) besteht,
wobei die Steuerplatine (6) ein CPU-Substrat (61) zum direkten Steuern des Betriebs der Übertragungseinheit (3), des Transporteinheitskörpers (11), der Verlängerungslinieneinheit (12), der Richtungsdreheinheit (13) und der Endeinheit (14) als Transportsteuerung des Probenbehälters (24) basierend auf einem Steuersignal von der Steuervorrichtung (5) umfasst, und
wobei der maximale durch das CPU-Substrat (61) steuerbare Steuerungszielbereich höchstens einen Transporteinheitskörper (11), insgesamt drei oder weniger Verlängerungslinieneinheiten (12) und Richtungsdreheinheiten (13) und so viele Endeinheiten (14) wie Richtungsdreheinheiten (13) umfasst.

2. Probenverarbeitungssystem (100) nach Anspruch 1, **dadurch gekennzeichnet, dass** die Verlängerungslinieneinheit (12) und die Richtungsdreheinheit (13) in einer zufälligen Reihenfolge mit dem Transporteinheitskörper (11) verbunden sind.

3. Probenverarbeitungssystem (100) nach Anspruch 2, **dadurch gekennzeichnet, dass** die Steuereinheit (6) einen Drehschalter (64) und einen DIP-Schalter (65) umfasst, die basierend auf Verbindungsinhalten der Verlängerungslinieneinheit (12) und der Richtungsdreheinheit (13) in der Probentransporteinheit (2) eingestellt sind.

## Revendications

1. Système (100) de traitement d'échantillon comprenant :
un dispositif (1) de prétraitement effectuant un prétraitement pour analyse d'un échantillon contenu dans un récipient (24) pour échantillon ;
un dispositif (4) d'analyse effectuant un traitement pour analyse de l'échantillon ayant été soumis au prétraitement par le dispositif (1) de prétraitement ;
une unité (2) de transport d'échantillon transportant le récipient (24) pour échantillon sur un chemin de transport unidirectionnel entre le dispositif (1) de prétraitement et le dispositif (4) d'analyse ;
une unité (3) de transfert transférant l'échantillon entre le dispositif (4) d'analyse et l'unité (2) de transport d'échantillon ; et
un dispositif (5) de commande qui est connecté à l'unité (1) de prétraitement, à l'unité (2) de transport d'échantillon, à l'unité (3) de transfert et au dispositif (4) d'analyse sur un réseau et peut exécuter une commande générale des instruments respectifs dans ces unités respectives et divers processus incluant une opération arithmétique de résultats d'analyse ou similaires,
dans lequel l'unité (2) de transport d'échantillon comprend un nombre requis, en fonction d'une configuration système, de :
un corps (11) d'unité de transport pour une connexion directe à l'unité (3) de transfert dans l'un ou l'autre de sens perpendiculaires par rapport à un sens de transport,
une unité (13) de changement de sens changeant le sens de transport du récipient (24) pour échantillon,
une unité (12) de ligne d'extension connectant deux points séparés dans un sens rectiligne auxquels il est possible de connecter l'un(e) quelconque parmi le corps (11) d'unité de transport, une autre unité (12) de ligne d'extension, et l'unité (13) de changement de sens, et
une unité terminale (14) connectée à un côté aval du corps (11) d'unité de transport si aucune unité (12) de ligne d'extension, ni unité (13) de changement de sens n'est connectée au côté aval du corps (11) d'unité de transport, et connectée à un côté aval de l'unité (13) de changement de sens si aucun corps (11) d'unité de transport, ni aucune unité (12) de ligne d'extension n'est connecté(e) au côté aval de l'unité (13) de changement de sens,
**caractérisé par** un tableau (6) de commande qui est monté sur le corps (11) d'unité de transport ou l'unité (3) de transfert,
dans lequel l'unité (2) de transport d'échantillon est composée d'un corps (11) d'unité de transport, de trois unités (12) de ligne d'extension et unités (13) de changement de sens ou moins au total, et d'autant d'unités terminales (14) que d'unités (13) de changement de sens,
dans lequel le tableau (6) de commande inclut un substrat (61) d'UC pour commander directement le fonctionnement de l'unité (3) de transfert, du corps (11) d'unité de transport, de l'unité (12) de ligne d'extension, de l'unité (13) de changement de sens, et de l'unité terminale (14) comme une commande de transport du récipient (24) pour échantillon sur la base d'un signal de commande provenant du dispositif (5) de commande, et
dans lequel la plage cible maximum de commande pouvant être commandée par le substrat (61) d'UC est, au plus, un corps (11) d'unité de transport, trois unités (12) de ligne d'extension et unités (13) de changement de sens ou moins au total, et autant d'unités terminales (14) que d'unités (13) de changement de sens.

2. Système (100) de traitement d'échantillon selon la revendication 1, **caractérisé en ce que** l'unité (12) de ligne d'extension et l'unité (13) de changement de sens sont connectées au corps (11) d'unité de transport dans un ordre aléatoire.

3. Système (100) de traitement d'échantillon selon la revendication 2, **caractérisé en ce que** l'unité (6) de commande comprend un commutateur rotatif (64) et un commutateur DIP (65) qui sont paramétrés sur la base de contenus de connexion de l'unité (12) de ligne d'extension et de l'unité (13) de changement de sens dans l'unité (2) de transport d'échantillon.
